# EUROPEAN PATENT SPECIFICATION

(11) **EP 4 626 221 B1**
(45) Date of publication and mention of the grant of the patent: **26.08.2026**
(21) Application number: 23813382.1
(22) Date of filing: 27.11.2023
(51) Int. Cl.: A01G 20/12, A01G 20/15

(54) **SEDUM HARVESTER**
SEDUM-ERNTEGERÄT
RÉCOLTEUSE DE SEDUM

(30) Priority: 30.11.2022 NL 2033645
(43) Date of publication of application: 08.10.2025
(73) Proprietor: Van Vuuren Machines B.V., 3417 BT Montfoort (NL)
(72) Inventor: VAN VUUREN, Zhanna Rudakova, 3281 LC HARMELEN (NL)
(74) Representative: EP&C
(86) International application number: PCT/EP2023/083198
(87) International publication number: WO 2024/115404

(56) References cited:
- WO-A1-2006/081654
- US-A- 4 162 709
- US-A- 5 775 436
- US-A1- 2013 259 629
- US-A1- 2017 027 098

## Description

The present invention relates to a sedum slab harvester for harvesting sedum substrate slabs from the ground, such as a field of cultured sedum.

In recent times increasing attention has been paid to greening the living environment in view of sustainability. One of the aspects thereof concerns the provision of a vegetation layer of living plants like one or more sedum species, a succulent, on parts of buildings, such as roofs. Benefits of this vegetation layer include inter alia protection of the roof from UV radiation thereby improving the (roof) service life, a habitat for animals, like birds and insects, thereby increasing biodiversity, air purification thereby improving the urban air quality and water retention thereby improving control of run off rain water, heat and sound insulation, and low maintenance costs. Sedum combined with its substrate (hereinafter 'sedum substrate') is commercially available in various forms such as flat mats, rolled strips and in trays,.

Sedum for commercial supply is typically grown in the open field and harvested manually. Sedum differs from turf in that inter alia the root structure of sedum is more loose making the sedum substrate vulnerable, sedum is typically grown on a mixed substrate of earth and additives, for example coconut (husk), in which substrate usually a plastic netting as a reinforcement is incorporated, instead of only soil. Typically, also a (plastic) separation foil is arranged on the bare earth, on which the sedum in the mixed substrate is to be grown. These differences complicate harvesting, transport and handling of sedum substrate compared to turf. A known alternative is culturing sedum in trays, filled with a suitable substrate, on an open field. The trays provide a rigid carrier for the sedum substrate, thereby increasing handling. However, growing itself as the trays need to be regularly arranged on the field and after growth collecting of the trays are laborious processes and therefore increase the total costs.

Sod harvesters for harvesting turf in rolled or flat shape are known. A known type of sod harvester commercially available from the present applicant for harvesting turf while moving at a constant speed over a turf field, first provides parallel longitudinal cuts by coulter discs in the turf field and then a transverse cut by a falling knife. The slab thus cut from the turf field is separated from the ground and received by an inclined conveyor, which transports the slab to a stacking unit. The harvester may be provided with a tool for winding a flat slab into a rolled shape. The stacking unit picks up one or more slabs and stacks them on a transport carrier like a pallet. Once the transport carrier is fully loaded, the carrier is put on the field, collected and transported further, while an empty carrier is reloaded into the stacking unit either by hand or automatically by a carrier injector from a carrier storage present on the sod harvester.

WO2006/081654A1 has disclosed a sod harvester which, after harvesting sod, can pick up a longitudinally and transversely cut sod and stack the cut slabs in flat condition on a pallet. In an embodiment thereof. In embodiments thereof the cross-cut is performed by a cross-cut knife, while a longitudinally cut strip of sod travels on a conveyor mechanism from a sod pick-up mechanism to a stacking system.

However, it has appeared that known sod harvesters for mechanically harvesting turf as rolled or flat slabs in open field cultivation are not suitable for harvesting sedum substrate in the same way, mainly as a result of the higher vulnerability due to the difference in substrate and the root structure between sedum and turf, the possible presence of a reinforcing netting and/or the frequent presence of a plastic separation foil.

In particular it has appeared that the transverse cut made by the falling knife necessary to cut a strip of sedum substrate in the width direction may be incomplete due to the root structure of sedum and the reinforcing netting, as a result of which a cut slab may have frayed edges, in particular front and rear edges, and inappropriate dimensions resulting in reduced quality, or even a cut slab may be not fully separated from the longitudinally cut strip and remain partly connected to the strip. In addition to the inevitable final rejection of a slab having inappropriate dimensions or quality, further processing such as stacking by the harvester is impeded, and disruptions in the harvesting process and in the operation of the harvester may occur.

Furthermore, if a plastic separation foil is present, transverse cutting a slab of sedum substrate, while it is in contact with the foil, will result in waste parts of plastic having dimensions of the slab, which waste parts need to be collected individually in order to prevent damage and contamination of the field and its environment.

In view of these difficulties in general harvesting of sedum substrate from an open field is performed manually - at least partly -, which is labour intensive, heavy, and costly. Therefore there is a general need for a device that allows mechanical harvesting of sedum substrate slabs from an open field.

The present invention aims at solving this need or at least to provide an alternative sedum slab harvester.

In particular, the present invention aims at the provision of a sedum slab harvester that does not suffer from the above drawbacks or at least to a lesser extent.

An object of the present invention is to provide a sedum slab harvester that allows to produce a reliable transverse cut through the sedum substrate thereby ensuring the cut sedum substrate slabs to possess appropriate dimensions thereby improving quality.

Another object is to provide a sedum slab harvester that allows to process vulnerable slabs with a reduced risk of damaging.

Yet another object of the invention is to provide a sedum slab harvester that allows to stack cut slabs, while maintaining the integrity of the vulnerable slabs.

Still another further object of the invention is to provide a sedum slab harvester that allows to collect the separation foil.

A further object of the invention is to provide a sedum slab harvester, wherein the various operations of its components are controlled and synchronized with the movement speed of the harvester over the field.

Yet another object of the invention is to provide a sedum slab harvester that allows to monitor at least one dimension of the cut slab in order to control its size.

According to a first aspect, the invention provides a sedum slab harvester as defined in claim 1.

The sedum slab harvester according to this first aspect of the invention generally comprises a frame provided with one or more supporting wheels, which frame is mounted, e.g. (fixedly/releasably) coupled, to a driven vehicle, such as a tractor or other agricultural device. In an alternative embodiment the sedum slab harvester may have its own wheeled chassis, driver's cab and drive for moving around a field. A first cutting unit is configured for cutting at least one longitudinal edge, typically both longitudinal edges, of the strip to be formed from the field of sedum substrate. A separation head downstream of the first cutting unit is configured for separating the longitudinally cut strip from the ground, and if present, also from the separation foil, that remains on the ground. A first conveyor system, typically at least one upwardly inclined endless conveyor with respect to the horizontal ground, receives the separated strip and conveys it to a second conveyor system, typically comprising one or more endless conveyors also at least partly arranged at an inclined angle. At the transfer position from the first conveyor system to the second conveyor system, thus at the downstream end of the first conveyor system, a second cutting unit is provided, which second cutting unit is configured for cutting the strip in a direction transverse to the longitudinal direction of the strip, in particular once a predetermined length of strip has passed, to produce a cut slab of sedum substrate. The slab cut from the strip is advanced by the second conveyor system to a stacking unit, which is configured for receiving the cut slabs from the second conveyor system and stacking thereof on a suitable transport carrier, such as a pallet.

According to the invention the second cutting unit that is arranged at the transfer position between the first conveyor system and the second conveyor system, comprises a cutter frame to which a plurality of adjacent circular cutting elements are mounted such that these are rotatable in a direction parallel to the transverse direction. In other words the axes of rotation of these cutting elements are parallel to the conveyance direction of the first and second conveyor systems. The plurality of cutting elements preferably extend almost the full width of the strip or even beyond the longitudinal strip edges. Typically the cutting elements are oriented perpendicular to the supporting faces of the first conveyor system and the second conveyor system. The cutting elements are mounted to the cutter frame, allowing movement of the cutting elements in a first (transverse to the conveying direction) direction while contacting the strip, such that a strip can be cut over its full width from one longitudinal edge thereof to the other parallel longitudinal edge of the strip by the simultaneous operation of the cutting elements. The cutting elements are also mounted to the cutter frame allowing movement in a second direction, opposite to the first direction, at a height above the first conveyor system and the second conveyor system without contacting the strip of sedum substrate by the cutting elements, such that an advancing strip end can pass freely below the cutting elements, until a next cutting operation of the second cutting unit.

By having a plurality of cutting elements in a side by side arrangement in the transverse direction, preferably extending over essentially the full width or beyond, only a limited movement in the first (transverse) direction, e.g. in the order of half the diameter in case of circular cutting elements, is necessary to establish a complete transverse cut through the strip of sedum substrate. This limited transverse movement requires less time to complete the transverse cut compared to a single cutting element of same dimensions (e.g. same diameter). This is important as the strip is continuously supplied by the first conveyor system to the position of the second cutting unit. For productivity, the transverse cutting operation should have a short duration, otherwise the cutting elements would block the continuously fed strip that as a result of the obstructing cutting elements would wrinkle and fold, most times upwardly, which deforms the sedum substrate and/or provide an oblique transverse cut, as has appeared upon using a single cutting element. Wrinkling and/or folding involves the risk of damaging, tearing or even breaking of the sedum substrate, thereby deteriorating the slab integrity and/or shape and as a result decreasing manipulability and/or quality thereof. A single rotating cutting element that has to move in the first transverse direction over the full width in order to provide the transverse cut would also require more time thereby necessitating a slower speed (or temporarily halting) of the first conveyor system and thus of the towing vehicle, and thus the harvesting capacity would be seriously affected. The cutter frame of the second cutting unit is also configured for moving in the upward direction with respect to the first conveyor system and second conveyor system in order to allow free passage of the strip beneath the cutting elements. During harvesting the rotating cutting elements perform a cyclic movement in the transverse and height direction. Additionally, the transverse cutting operation by the second cutting unit is performed on the strip at a position, where the strip has been separated from the separation foil, if any, so that the separation foil cannot be cut to pieces by the second cutting unit, which pieces would need to be collected separately. In the invention, such cut foil pieces cannot disturb the operation of the harvester, e.g. getting stuck in one of the conveyors and/or second cutting unit. Therefore the sedum harvester according to this aspect of the invention provides for a safe and reliable operation thereof in mechanically harvesting of sedum substrate slabs from a culturing area, such as an open field.

In an embodiment of the second cutting unit the plurality of driven cutting elements are mounted on a movable cutting unit subframe, that is movably mounted to a fixed cutting unit subframe. The movable subframe is displaceable in the first and second direction, as well as in the height direction, with respect to the fixed subframe. Preferably, the second unit comprises two movably configured subframes: a first subframe configured to be movable in the height direction with respect to a fixed subframe, a second subframe to which the cutting elements are mounted, configured to be movable in the transverse direction with respect to the first subframe.

Driving of the movable cutting unit subframe(s) may be accomplished by a suitable drive, such as a rack-and-pinion system or electric driven carriage to which the subframe(s) is (are) mounted. In a preferred embodiment the movable cutting unit subframe(s) are movably mounted by one or more piston cylinder assemblies configured for moving a movable subframe in the first and second direction and configured for moving a movable subframe in the height direction respectively. In an embodiment thereof the piston cylinder assemblies may be hydraulic assemblies.

In an embodiment the cutting elements are configured for co-rotation in the first direction of the subframe. Preferably each cutting element has its own drive, each of which is synchronously driven in a controlled manner.

In an embodiment the cutting elements are circular blades provided with a diamond cutting edge at the circumference of the blades.

If undesired excess wrinkling and/or damage to the sedum strip occurs due to the transverse cutting operation by the cutting elements, the first conveyor system may be temporarily halted, while the towing vehicle keeps on moving, by having a buffer between the first cutting unit and the second cutting unit, which buffer is configured for temporarily accumulating the sedum strip that is being conveyed from the first cutting unit. For example, the sedum strip may be guided over a driven roll positioned between the first cutting unit and the first conveyor system and spaced apart therefrom. Upon halting the first conveyor system, the driven roll continues to rotate dependent on the speed of the towing vehicle. Simultaneously the part of the sedum strip in front of the second cutting unit may be held at a fixed position on the halted first conveyor means, e.g. by means of an engaging arm that is movable between an engaging position wherein the engaging arm engaging the sedum strip at a position upstream of the cutting elements and a non-engaging position wherein the engaging arm is raised allowing the strip to pass beneath it. In an embodiment thereof the engaging arm is fixed to the movable cutting subframe, in particular the first subframe as discussed above. On performing the transverse cut the strip is allowed to hang loosely over the driven roll, preferably at the upstream and downstream side thereof. Once the transverse cutting is completed the second cutting unit is lifted to its position allowing free passage of the sedum strip thereby also releasing the engaging arm from the sedum substrate. The first conveyor system is actuated again, typically at a speed slightly higher than the speed of the towing vehicle, thereby straightening the hanging sedum strip. The sedum substrate is allowed to slip a bit on the first conveyor, but without causing damage thereto.

The sedum slab harvester comprises a stacking unit that is configured for stacking cut slabs of sedum substrate received from the second conveyor system in one or more stacks. Prior to stacking, the slab of sedum substrate may be rolled into a roll, e.g. using a rolling device arranged at the downstream end of the second conveyor system. Such rolling devices are known per se from harvesters configured for harvesting turf in rolled shape and can be used for rolling a sedum substrate slab in a roll.

Sod harvesters for harvesting turf having a stacking unit for stacking sods in rolled shape (rolls) or in a flat shape (mats), e.g. comprising a lifting gripper provided with hooks or teeth to insert in one or more rolls or one or more flat mats, are known. Such known stacking units may be used in the sedum slab harvester according to the first aspect of the invention to transfer one or more slabs of sedum substrate, either in rolled shape or flat shape, from the conveying system to a transport carrier, on which the rolls or mats are stacked.

Engaging a slab of sedum substrate from above by such a lifting gripper and lifting it, despite the presence of a reinforcing netting in the sedum substrate, may cause sagging and due to its less solid structure also tearing, in particular in case of stacking the slabs as flat mats. This risk is even more pronounced, when the lifting gripper is operated to drop the one or more rolled slabs or the one or more mats from a certain height on the rolls or mats already stacked on the transport carrier.

In order to retain the structural integrity of a slab of sedum during stacking in an aspect of the invention the stacking unit comprises a stacking conveyor, preferably horizontally arranged, configured for receiving and conveying thereof a cut slab of sedum substrate (either a rolled slab or a flat mat) from the second conveyor system, a slab support configured for movement in a direction transverse to the conveying direction of the stacking conveyor, a gripper system configured for gripping from above a cut slab from the stacking conveyor and transferring the cut slab onto the slab support and configured for transferring the cut slab from the slab support to a collection carrier, and a collection carrier positioned below the gripper system and configured for receiving cut slabs from the slab support in a stack arrangement. By supporting the cut slab from below by the slab support during transfer from the stacking conveyor to the collection carrier sagging is suppressed and as a result the risk of damaging the sedum substrate slab is reduced.

In an embodiment the slab support may be an endless belt conveyor.

In an embodiment the stacking unit comprises a stacking frame having frame beams extending from the stacking conveyor in a direction transverse to the conveyance direction of the stacking conveyor, a slab support plate movably supported by the frame beams and configured for reciprocating movement in a direction transverse to the movement direction of the stacking conveyor between a loading position, wherein the gripper system slides a cut sedum substrate slab from the stacking conveyor onto the slab support plate, and an unloading position, wherein the gripper system slides the cut sedum substrate slab from the slab support plate onto the collection carrier. Advantageously in the loading position the slab support plate extends beneath the stacking conveyor, in particular beneath the upper conveying part of an endless conveyor belt as stacking conveyor and above the return part thereof. By arranging the slab support plate essentially at the height of the stacking conveyor, the difference in height between the stacking conveyor and the slab support plate is kept small.

In an embodiment the gripper system may comprise a gripper, which is configured for movement in a direction transverse to the conveying direction of the stacking conveyor, e.g. fixed to the slab support plate or also movably arranged on the stacking frame beams.

In an embodiment the gripper system comprises a gripper having an extendable gripping arm, e.g. telescopically arranged arms or hinged arms, wherein the gripper is mounted at a fixed position of the harvester, e.g. at the lateral side of the collection carrier opposite the stacking conveyor.

In another embodiment the gripper system comprises a first gripper, mounted on the slab support plate, and configured for moving in a direction transverse to the movement direction of the stacking conveyor, for gripping from above a cut slab from the stacking conveyor and transferring it to the slab support plate, a second gripper, mounted on the harvester, e.g. at the end of the frame beams opposite to the stacking conveyor, at a fixed position, and configured for gripping from above a cut slab from the slab support plate. In this embodiment, the first gripper engages the slab from above and by moving the first gripper in the transverse direction to the conveying direction of the stacking conveyor the slab is forced to slide from the stacking conveyor onto the slab support plate. The slab support plate is essentially arranged at the height of the stacking conveyor, such that the difference in height between the stacking conveyor and the slab support plate is kept small. Preferably in the loading position the slab support plate extends beneath the upper conveying part of an endless stacking conveyor. Next the slab support plate loaded with the cut slab moves along the frame beams to a position above the collection carrier, e.g. loaded with a transport carrier such as a pallet. The first gripper may be arranged to move simultaneously with the slab support for continued holding the cut slab on the slab support.

At an unloading position above the collection carrier, and when the first gripper has released the cut slab on the slab support plate, the second gripper is operated to engage the slab. Next the slab support plate is returned to its loading position at the stacking conveyor, thereby sliding the slab hold by the second gripper from the slab support on top of the collection carrier or on top of the slabs already present on the collection carrier. The cycle is repeated on a new slab that has arrived on the stacking conveyor.

Due to the sliding movements and supported transfer by the slab support from the stacking conveyor to the collection carrier the risk of damaging the vulnerable slabs is reduced, thereby ensuring the structural integrity thereof and thus slab quality.

In an embodiment the second gripper may be movably mounted to the frame beams, which is beneficial if the cut slabs are to be mounted in two or more stacks on the collection carrier. The slab support plate may be slidingly arranged on the beams or supported by wheels. The driving mechanism for reciprocating movement of the slab support plate and/or the first gripper and/or second gripper may comprise a (pneumatic) piston cylinder assembly, a rack pinion system, a chain or belt drive and the like.

The collection means typically is provided with a support for a transport carrier, such as a pallet, which support is displaceable in the height direction, such that the top of the uppermost stacked mat or roll can be maintained at a predetermined level with respect to the slab support, allowing to keep the height difference between the top of the slab support and the top of the uppermost stacked mat or roll small and thus an easy sliding transfer.

In an embodiment the sedum slab harvester also comprises a transport carrier injector, configured for discharging a loaded transport carrier such as a pallet onto the ground and reloading an empty transport carrier from a transport carrier storage on the sedum slab harvester, in particular the collection means of the stacking unit. A pallet injector is known per se from sod harvesters, e.g. those commercially available from the applicant.

In an embodiment a gripper of the gripper system, in particular the above mentioned first gripper and/or second gripper, comprises a gripper element, such as a gripper beam, extending in the conveyance direction of the stacking conveyor, configured to be movable between a gripping position for engaging the cut slab of sedum substrate and an open position, wherein there is no contact with a sedum slab (mat or roll), e.g. using a (pneumatic) piston cylinder assembly.

In order to ensure a firm grip on the mat or roll the face of a gripper element configured for engaging the cut slab from above is provided with a plurality of projections, such as pins or teeth. In the gripping position the projections are inserted to a certain extent in the mat or roll. The projections may be curved, in particular they may have a curvature according to a relatively small circle arc having a radius around the rotation axis of the gripper element for rotation between the gripping position and open position thereof and vice versa. Such curved projections, once inserted in the slab, serve to hold the slab firmly and to prevent damage, even when there is a small height difference between the stacking conveyor and the slab support and/or the slab support and the top of an already stacked slab during transfer.

In a further aspect of the invention a sedum slab harvester is provided with a foil collector, configured for collecting used (plastic) separation foil from the ground. By collecting the used separation foil, typically cut in a strip by the first cutting unit that provides at least one longitudinal cut, and once the strip of sedum substrate is removed from the separation foil, blowing away, tearing into pieces, and the like is effectively prevented. Such a foil collector, in particular a coiler, may be applied in every type of harvester that is intended for harvesting crops, plants and the like that are grown in a substrate using a separation foil between substrate and the lower underground. Thus this aspect of the invention provides a harvester, configured for harvesting a crop grown in a substrate using a separation foil, which harvester is provided with a foil collector, configured for collecting used separation foil, preferably in strip shape.

In an embodiment thereof the coiler comprises a rotatably arranged foil winding reel having a rotary axis in the traverse direction in the transverse direction with respect to the driving direction of the harvester, configured for winding the separation foil from the ground, as well as a reel drive configured for driving the foil winding reel. During forward movement of the (sedum slab) harvester the used foil is engaged by the reel on the ground and is picked up, thereby avoiding the need of separate collection thereof. Preferably, the used separation foil collector, in particular the above coiler, is comprised in the sedum slab harvester of the first aspect of the invention.

It has appeared that the stacking operation, in particular the cycle time for stacking a mat in the stacking unit, can be a limiting factor for the capacity of the sedum substrate harvester compared to the other components.. Rolls are typically wound from the slab at a position near the transfer position from the second conveyor system to the stacking conveyor, and could be buffered on the stacking conveyor, e.g. three or more, which subsequently are gripped together by the first gripper and while being supported on the slab support they are transferred to the transport carrier. For flat mats this buffering capacity of a single stacking conveyor is not available. In order to create sufficient time for a stacking cycle, the speed of the second conveyor system may be temporarily increased compared to the speed of the first conveyor system, thereby spacing apart a cut slab from the leading edge of the strip. This increase in speed will also flatten any folds that have occurred in the strip due to hold-up of the leading edge when executing the traverse cutting operation by the second cutting unit. Generally the first conveyor system will comprise a single conveyor. Typically the conveyors of the first conveyor system, the second conveyor system and the stacking conveyor are endless belt conveyors. The belt itself may be composed of a plurality of relatively small belts in a side by side arrangement. The conveying surface may be provided with tiny projections for extra grip on the sedum substrate strip and/or slab.

In an embodiment of the sedum slab harvester according to the invention the second conveyor system comprises at least two subconveyors in series, configured for establishing a distance between cut slabs of sedum substrate from the second cutting unit to the stacking unit. The second conveyor system according to this embodiment allows the spacing between slabs in the sedum slab harvester to be established in a controlled manner. Because of the controlled spacing, the stacking unit can be used to pick up a cut slab from the stacking conveyor and stack it on the collection carrier of the stacking unit, before a subsequent cut slab arrives at the stacking conveyor from the second conveyor system.

A controller is configured for controlling the operation of the actively controlled harvester components based on signals received from one or more sensors, configured for detecting the presence and/or position of a sedum substrate strip end and/or a cut slab of sedum substrate on the second conveyor system and the stacking unit.

Typically the actively operated components, including first conveyor system, second cutting unit, second conveyor system, stacking unit, optional separation foil collecting means, of the sedum slab harvester are controlled by the controller, depending on the forward speed of the harvester, such as the towing vehicle.

Typically the controller is configured for setting a constant speed of the harvester, and for coordinating the operation of the other components, in particular the speed of the first conveyor system, cyclic movement of the second cutting unit, speeds of the subconveyors of the second conveyor system, and the stacking unit, e.g. the speed of the stacking conveyor and operation of the gripper system and slab support.

In an embodiment the sensors configured for detecting the presence of the strip end or slab in the harvester are typically positioned at least at the transfer from the first subconveyor to the second subconveyor of the second conveyor system, at the transfer from the second subconveyor of the second conveyor system to the stacking conveyor, and at the downstream end of the stacking conveyor.

In an embodiment two such sensors, spaced apart e.g. about 10-30 cm, such as 20 cm, in the conveying direction, are positioned at the downstream end of the stacking conveyor. The upstream sensor thereof initiates a controlled deceleration thereby allowing to more accurately position the cut slab on the stacking conveyor upon halting the stacking conveyor, which halting is triggered by the second downstream sensor. Alternatively a sensor sensing the absence of a slab at the transfer position from the second conveyor to the stacking conveyor can trigger the controlled deceleration.

Generally the controller is configured to drive the first conveyor system at a speed equal to the forward speed of the sedum slab harvester over the ground, and to drive the second conveyor system and stacking unit in order to establish a spacing between cut slabs on the second conveyor system by performing a cycle of accelerating and decelerating the subconveyors of the second conveyor system and the stacking conveyor.

E.g. the first subconveyor of the second conveyor system is driven at an increased speed such as three times the speed of the first conveyor system. Upon sensing the leading edge of the strip at the transfer position of the first subconveyor to the second subconveyor the speed of the first subconveyor is decelerated to the speed of the first conveyor system. The cutting operation by the second unit is performed on the sedum substrate strip thereby producing a sedum substrate slab. Directly after the second unit has performed its cutting movement in the first direction, the first subconveyor is accelerated to the increased speed, even if the cutting elements are not yet raised. A little hold up of the new leading end of the strip by the lowered cutting elements may occur. When the cutting elements are raised, this hold up is compensated by the increased speed of the first subconveyor and the strip is flattened. During further conveyance the new strip end will slip on the first subconveyor, until the new leading end of the strip is detected by the sensor at the transfer position of the first subconveyor to the second subconveyor. This subcycle of adjusting the speed of the first subconveyor and driving of the second cutting unit is repeated continuously.

The second subconveyor is driven at the increased speed of the first subconveyor of the second conveyor system. Upon sensing the front end of the slab by the sensor at the transfer position of the second subconveyor to the stacking conveyor of the stacking unit, the second subconveyor is decelerated to an intermediate speed in between the increased speed and the speed of the first conveyor, such as two times the speed of the first conveyor. Upon sensing the rear end of the cut sedum substrate slab by the sensor at the transfer position of the second subconveyor to the stacking conveyor of the stacking unit, the second subconveyor is accelerated to the increased speed until the front end of a subsequent slab is detected at the sensor at the transfer position of the second subconveyor to the stacking conveyor. This subcycle of the second conveyor is repeated continuously.

The stacking conveyor of the stacking unit is driven at the intermediate speed. Upon sensing the front end of the slab by the upstream sensor of the two sensors at the downstream end of the stacking conveyor, the speed of the stacking conveyor is decelerated to a slow speed such as half the speed of the first conveyor system. Upon sensing the front end of the slab by the downstream sensor of the two sensors at the downstream end of the stacking conveyor, the speed of the stacking conveyor is decelerated to zero and the stacking conveyor is halted. The slab is transferred from the stacking conveyor to the collection means by the gripper system. Upon removal of the slab from the stacking conveyor, the stacking conveyor is accelerated to the intermediate speed. This subcycle of the stacking conveyor and grippier system is repeated continuously. Based on the speed of the respective conveyor and lapsed time from the cutting operation of the second cutting unit the sensors allow to determine the length of the cut slab, and if its calculated length is outside a predetermined range to reject that slab. For rejection purposes a further reject conveyor may be provided adjacent the downstream end of the stacking conveyor, configured for receiving a slab to be rejected from the stacking conveyor and discharging thereof, e.g. on the ground. If needed the reject conveyor may be used as a temporarily buffer position in case of failure or distortion of the stacking unit, e.g. the grippers, and/or transport carrier injector, if present. Thus in an embodiment the harvester comprises a reject conveyor downstream of the stacking conveyor, configured for receiving a slab of sedum substrate, wherein the controller is configured for determining a slab length from signals received from the sensors, and driving the stacking conveyor and reject conveyor if the determined slab length is outside a predefined range. E.g. the slab has a desired length of 600 -1200 mm and a width of 400 up to 800 mm. Typically the dimensions of the subconveyors of the second conveyor system and the stacking conveyor of the stacking unit are adapted to the size of the slab.

It will be clear that the aspects of a foil collector, configured for collecting a separation foil, can be similarly applied to other types of harvesters, where a crop is cultured in the open field using a separation foil, as well as to different sedum substrate harvesters with other type(s) of conveyors, second cutting unit and/or stacking unit than the ones discussed above.

The same applies to the method and system of multiple conveyors for substrate handling (sedum, turf) that are controlled to carry out a cyclic operation of accelerating and decelerating in order to establish spacing between subsequently conveyed slabs, in particular where the slabs are to be stacked as flat mats.

It will also be apparent that the monitoring method and system for determining the length of a cut substrate slab using sensors and rejection of slabs having a length outside a predefined range can be used for substrate slab harvesters in general.

Furthermore, the stacking unit having a support slab for transfer of a cut slab from a stacking conveyor to a collection carrier, as described above, can be used for any type of substrate of a crop, wherein careful handling of a vulnerable substrate is needed. This stacking unit can also be used for handling trays, wherein a crop substrate is grown in trays arranged on the field. In that case the first and second cutting units for cutting a strip longitudinally and in in transverse direction, and separation head, are omitted.

The invention is further illustrated by means of the attached drawing, wherein:
Fig. 1 diagrammatically shows an embodiment of a sedum slab harvester according to the invention in side view;
Fig. 2 diagrammatically shows the embodiment of a sedum slab harvester of Fig. 1 - at least partially - in top view;
Fig. 3 diagrammatically shows an embodiment of a second cutting unit of a sedum slab harvester according to the invention in more detail;
Fig. 4 diagrammatically shows an embodiment of a stacking unit of a slab sedum harvester according to the invention; and
Fig. 5 diagrammatically shows an embodiment of a buffer for temporarily accumulating a sedum strip in a sedum slab harvester according to the invention.

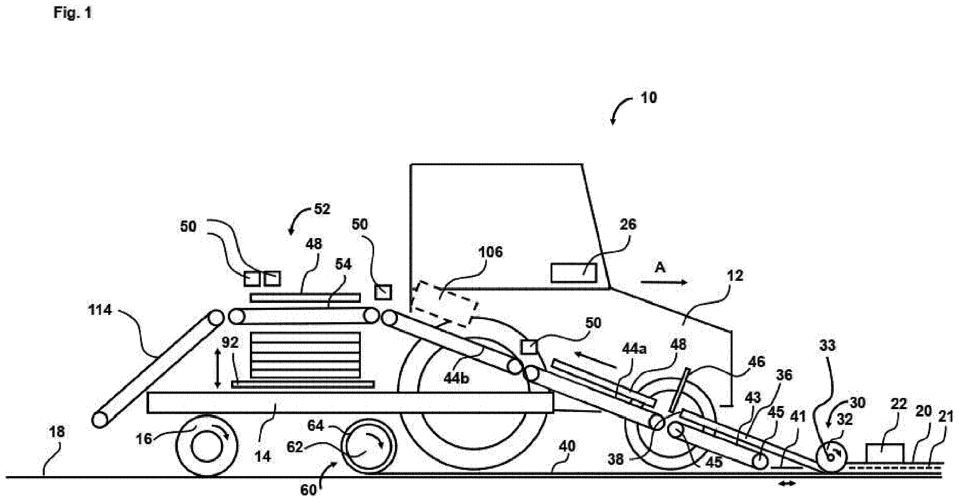

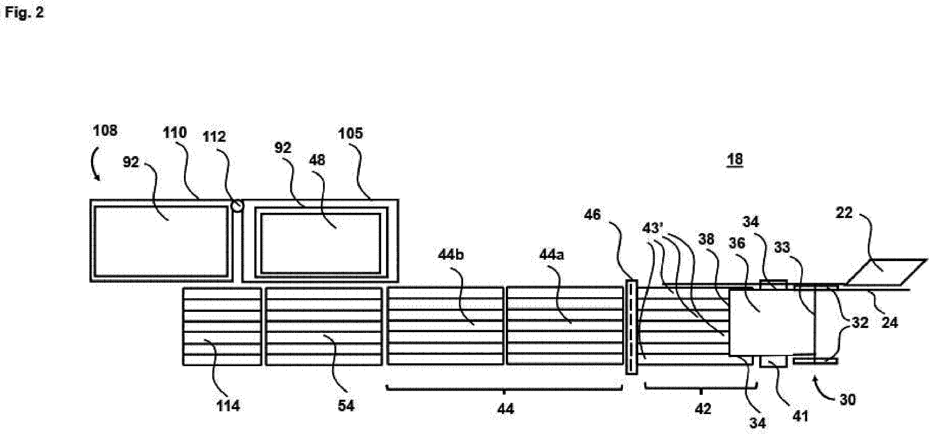

In Fig. 1 and Fig. 2 an embodiment of a sedum harvester according to the invention is shown diagrammatically in side view and top view respectively. The sedum harvester is generally indicated by reference numeral 10 and is mounted to a towing vehicle 12, such as a tractor or other agricultural vehicle. The sedum harvester 10 comprises a frame, shown in a simplified manner by beam 14, provided with one or more wheels 16, which frame 14 carries the various operational units of the sedum harvester 10. In this embodiment the harvester 10 mounted to the vehicle 12, extends at least partially along a lateral side of the vehicle 12. In the situation shown, the vehicle 12 rides in a forward driving direction (indicated by arrow A) on bare ground 18, from which sedum substrate 20 comprising reinforcing netting 21 has already been collected. Similarly the supporting wheels 16 ride on the bare ground 18. Thereby damage to the sedum substrate 20 to be harvested can be avoided. At the front end of the harvester a guide 22 is provided, which is configured to follow an already cut longitudinal edge 24 (see Fig. 2) of the sedum substrate 20 to be collected. The guide 22 comprises for example a proximity sensor or a contact sensor (not shown), a signal of which is processed in a controller 26 which steers the vehicle 12 at a predetermined speed along the field. A first cutting unit 30 comprising two knives 32, e.g. coulter discs, rotatably arranged on a horizontal rotation axis 33 transverse to the driving direction of the harvester, that are configured to cut the longitudinal edges 34 of the strip 36 of sedum substrate thus formed in a predetermined width. The front end 38 of the strip 36 is separated from the ground 18 and a separation foil 40, if present, by a separator head 41, such as an reciprocating (oscillating) plate having a lower plate face essentially parallel to the ground 18, and then taken up by a first conveyor system 42. In the embodiment shown the first conveyor system 42 comprises an endless conveyor belt 43 having multiple, in this case four, endless belts 43', that are spaced apart arranged parallel to one another, and two rolls 45, at least one of which is driven by a motor (not shown) controlled by the controller 26. Typically in operation the speed of the vehicle 12 and the first conveyor system 42 are maintained at the same speed in order to avoid pull on the strip 36 of sedum substrate, which would occur if the first conveyor system speed is higher than the speed of the vehicle 12 and/or to avoid accumulation of the separated strip 36 on the first conveyor system, if the speed thereof would be lower than the speed of the vehicle 12. The sedum slab harvester 10 may be provided with a sensor (not shown), e.g. at the guide 22, that measures the (forward) speed of the harvester. The first conveyor system 42 is upwardly inclined with respect to the ground 18, such that the strip 36 is conveyed to a higher level. At the downstream (upper) end of the first conveyor system 42 a second conveyor system 44 is arranged, that is configured for receiving the strip 36 from the first conveyor system 42. At the transfer position from the first conveyor system 42 to the second conveyor system 44 a second cutting unit 46 is positioned, that is configured for cutting a transverse cut in the strip 36 once a sufficient length of strip 36, typically determined by sensors 50, has passed beneath its cutting element/ The length may also be determined,. based on the known speed of the first conveyor system 42 and/or second conveyor system 44 and the time lapsed after the preceding cut.

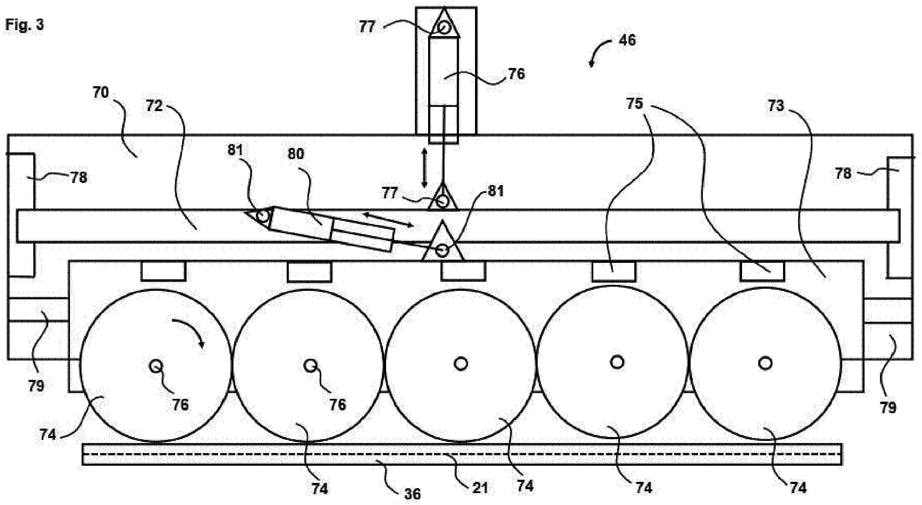

An embodiment of a second cutting unit 46 is shown in Fig. 3 and is described in more detail hereinbelow. A slab 48 thus cut from the strip 36 is advanced by the second conveyor system 44. In the embodiment shown the second conveyor system 44 comprises a first subconveyor 44a and a second subconveyor 44b, The second conveyor system 44, in particular the individual speeds of the subconveyors 44a and 44b, is cyclically controlled, such that after the transverse cutting operation of the second cutting unit 46, a spacing between the rear end of the cut slab 48 and the leading end 38 of the strip 36 and thus the leading end of the subsequent slab to be cut, is established. In addition temporarily increasing the speed of the conveyor system 44, e.g. subconveyor 44a, causes the leading end of the strip 36 to be stretched in the forward direction thereby flattening the strip if during the cutting operation of the second cutting unit 46 any hold-up causing wrinkles or folds has occurred. Sensors 50, configured for detecting the presence (e.g. contact switches) and/or position of sedum substrate, are typically arranged at the transfer position of the subconveyor 44a to the subconveyor 44b, at the transfer position of the second subconveyor 44b to a stacking unit 52, and at the downstream end of a stacking unit 52, in particular two spaced apart sensors at the downstream end of a stacking conveyor 54 of stacking unit 52. Generally, subconveyors 44a and 44b and stacking conveyor 54 have a similar configuration as the first conveyor belt 43. Thus the conveyors of the sedum slab harvester 10 are generally comprised of a plurality of parallel endless belts as illustrated for the first conveyor belt 43. The speed of the stacking conveyor 54 is controlled to be similar to that of the subconveyor 44b upon transfer of a slab 48 from the subconveyor 44b to the stacking conveyor 54. During the stacking operation described below the stacking conveyor 54 is halted.

Foil 40, if present, from which the sedum substrate has been removed, will typically have been longitudinally cut into a strip by the knives 32. The embodiment of a harvester 10 as shown in Fig. 1 and 2, comprises a foil collector 60. As shown, the foil strip 40 is wound on a reel 62 contacting the separation foil 40 on the ground 18 and thereby removed therefrom. The outer circumferential surface 64 of the reel 62 will typically have means for taking up the foil 40. Suitable examples thereof comprise a pressure sensitive adhesive, a temporary adhesive, mechanical holding means like pointed projections like needles or other types of projections projecting outwardly from said surface. Once the reel 62 is full with wound foil, it can be removed and substituted by a fresh empty reel. The reel 62 may be driven by rolling over the ground 18 caused by the forward movement of the harvester 10. Alternatively, the reel 62 may have its own drive (not shown).

An embodiment of a second cutting unit 46 is shown in more detail in Fig. 3. In fig. 3 the second cutting unit 46 comprises a cutter frame 70 mounted on the general frame of the harvester 10. The cutter frame 70 carries a first subframe 72, which on its turn carries a second subframe 73. In this embodiment multiple discs 74 having a diamond cutting edge (not separately shown) at their circumference are mounted on the subframe 73 adjacent to one another, such that in this embodiment (seen in projection from above) they cover the width of the strip 36. Typically the blades of the discs 74 do not overlap one another in order to make a clean cut in the strip 36 having a reinforcing netting 21. A disc 74 is rotatable about a rotation axis 76 that is arranged parallel to the conveying direction of the strip 36 to be cut. Typically the multiple discs 74 are each synchronously driven by their own drive 75 under control of the controller 26. The subframe 72 is movable, such as slidingly arranged in vertical guides 78, with respect to the fixed frame 70 in the height direction in order to allow free passage of the leading end 38 of the strip 36 underneath the discs 74 by means of a first piston cylinder assembly 76, mounted on rotary axes 77. A second piston cylinder assembly 80, mounted on rotary axes 81, allows to move, e.g. sliding in horizontal guides 79, the subframe 73 in the transverse direction for providing the transverse cut in the strip 36. During passage of the leading end of the strip 36 below the discs 74 the subframes 72 and 73 return back to its starting position.

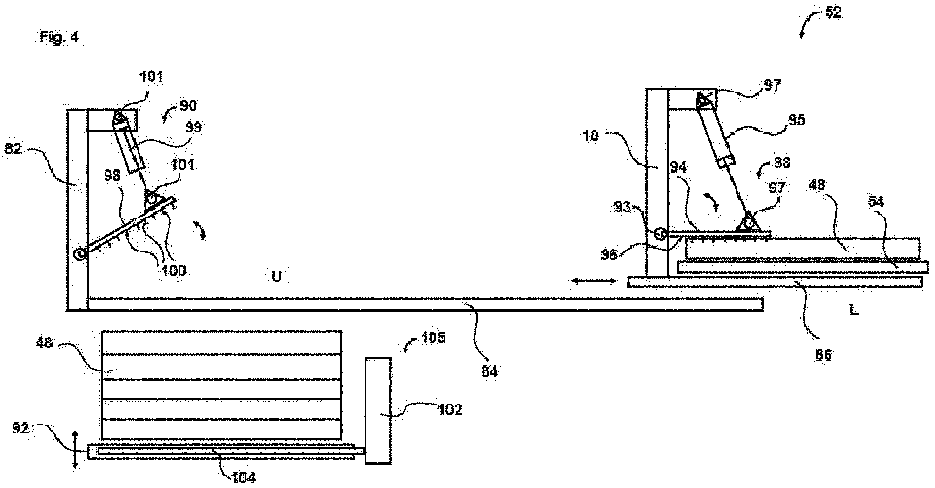

The stacking operation is performed on a slab 48, present on the stacking conveyor 54.of stacking unit 52, of which an embodiment is shown in Fig. 4. The stacking unit 52 mounted on the general frame of the sedum harvester 10 comprises a stacking unit frame 82, of which two beams 84 (only one visible) extend from the stacking conveyor 54 in a direction transverse to the conveying direction of the stacking conveyor 54. A slab support, such as a slab support plate 86, is movably, for example slidingly arranged, on the beams 84 between a loading position L and an unloading position U . A first gripper 88 is mounted on the slab support plate 86 and thus movable therewith. The slab support plate 86 extends beneath the upper conveying part of the stacking conveyor in the loading position. At the opposite end of the beams 84 a second gripper 90 is - in this embodiment fixedly - mounted on frame 82. The first gripper is configured for pulling a slab 48 from the stacking conveyor 54 onto the slab support plate 86 by movement of the slab support plate 86. The second gripper 90 is configured for pulling the slab 48 from the slab support plate 86 onto a transport carrier 92 such as a pallet, by return movement of the slab support plate 86. In the embodiment shown, the first gripper 88 comprises a hinged beam 94 driven by a piston cylinder assembly 95, rotatably mounted on rotary axes 97, provided with projections 96. The beam 94 can be rotated about axis 93 between a gripping position as shown in contact with the slab 48 and a non-working position (compare the open position of the second gripper 90) out of engagement with the slab. The second gripper 90 is similarly configured and in the embodiment shown comprises a hinged beam 98 having projections 100, driven by a piston cylinder assembly 99, rotatably mounted on rotary axes 101 and can be rotated between a gripping position in contact with the slab 48 and a non-working position out of contact with the slab. Upon movement of the slab support plate 86 and the first gripper 88 on the beams 84 while engaging a slab 48 on the stacking conveyor 54 and having the projections 96 inserted in the slab 48 to some extent, the first gripper 88 draws the slab 48 from the stacking conveyor 54 onto the slab support plate 86. Thus the slab 48 is conveyed to an unloading (stacking) position lateral from the stacking conveyor 54. Upon arrival at the unloading position the slab 48 is released from the first gripper 88 and the second gripper 90 is actuated to engage the slab 48 on the slab support 86. Upon movement of the slab support 86 back to the position at the stacking conveyor 54 the slab 48 held by the second gripper 90 is slidingly removed from the slab support 86 and positioned on top of any slabs 48 already present on the transport carrier 92. The transport carrier 92 itself is typically supported on a supporting frame 102 of collection carrier 105, of which the supporting arms 104 can be adjusted in height, such that the top of the uppermost slab on the packaging carrier 92 can be set to the height of the slab support 86. The height adjustment may be controlled based on signals of a height sensor configured for determining the height of the top surface. Thereby the transfer of a slab 48 from the stacking conveyor 54 to the packaging carrier 92 is performed, while the slab 48 is supported from below during lateral movement from the loading position at the stacking conveyor 54 to the unloading position at the transport carrier 92.

While the stacking operation has been described with respect to a flat slab, also one or more rolled slabs can be easily, if applicable simultaneously, removed from the stacking conveyor 54 to the transport carrier 92. Rolling of a slab of sedum substrate can be performed on the second conveyor system prior to transfer to the stacking conveyor 54, e.g. using a winding device known per se from turf sod harvesters. Such a winding device 106 has been depicted in Fig. 1 in dashed lines.

The sedum slab harvester 10 can be provided with a storage 108 (see Fig. 2) for storing a plurality of transport carriers. The storage 108 may have a storage frame 110, configured for carrying a plurality of empty transport carriers 92, which frame is hinged connected to the frame 14 of the sedum slab harvester 10 about a vertical axis 112, at the rear (seen in driving direction of the harvester 10) end of the stacking unit 52.

If a cut slab 48 does not meet a predetermined length, based on signals from the sensors 50 and/or e.g. the controlled speed of the second conveyor system 44, the slab may be rejected via reject conveyor 114.

In the embodiment shown the second gripper is fixed. If the transport carrier has a surface large enough to collect the slabs in two stacks adjacent to one another, the second carrier can be movably arranged on the beams to a position about half the transport carrier, allowing to stack subsequent slabs received on the stacking conveyor on the two stacks in an alternating manner.

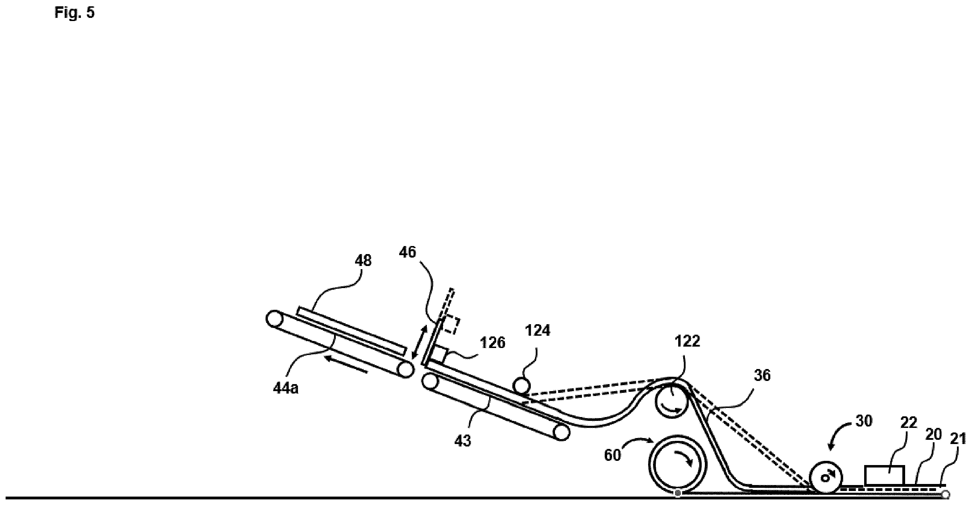

Fig. 5 diagrammatically shows an embodiment of a buffer for temporarily accumulating a sedum strip in a sedum slab harvester according to the invention. In Fig. 5 a part of an embodiment of a sedum slab harvester according to the invention is shown, which is provided with a buffer 120 at a position between the first cutting unit 30 and the second cutting unit 46. This buffer 120 buffer is configured for temporarily accumulating the sedum strip 36 that is being passed from the first cutting unit 30 towards the second cutting unit 46. In the embodiment shown the buffer 120 comprises a driven buffer roll 122, over which the strip 36 is guided. Typically the driven buffer roll 122 is positioned at a height in the range of the lower end and upper end of the conveyor 43 of first conveyor system 42. From the buffer roll 122 the strip is guided to the first conveyor system 42 between the conveyor 43 and a freely rotatable guiding roll 124, e.g. mounted with springs to press the strip 36 on the conveying surface of the conveyor 43. An engaging arm 126 is mounted to the second cutting unit 46 at the upstream side thereof, in particular the movable cutting unit subframe 72 that is movable in the height direction. The engaging arm 126 is configured for engaging the strip 36 in front of the cutting elements of the second cutting unit 46 upon performing a cutting operation. The strip 36 and the engaging arm 126 are shown in solid lines during the buffering operation and in broken lines, when the second unit 46 is raised to the position where it does not in contact with the strip 36.

For performing the transverse cutting operation the first conveyor system 42 is temporarily paused, while the driven roll 122 continues to rotate dependent on the speed of the towing vehicle. Simultaneously upon lowering the second cutting unit 46 into contact with the strip 36, the part of the sedum strip 36 in front of the second cutting unit 46 is engaged by the engaging arm 126. During the transverse cutting operation the continuously harvested strip 36 is allowed to sag on both sides of the roll 122, that is to say in this embodiment at the upstream side thereof between the first cutting unit 30 and the roll 122, and at the downstream side between the roll 122 and the first conveyor system 42. Upon lifting the second cutting unit 46 the front end of the strip 36 is released from engagement by the engaging arm 126 and the first conveyor system is again actuated. The extra length of strip derived from sagging during the transverse cutting operation is straightened again by driving the first conveyor system at a slightly higher speed than the towing vehicle.

## Claims

1. Sedum slab harvester (10) for harvesting slabs (48) of sedum substrate from the ground (18), comprising
a first cutting unit (30) configured for cutting at least one longitudinal edge (24) of a strip (36) of sedum substrate;
a separation head (41) configured for separating the strip (36) of sedum substrate from the ground (18);
a first conveyor system (42) configured for receiving and conveying the strip (36) of sedum substrate separated from the ground (18) by the separation head (41);
a second cutting unit (46) arranged at the downstream end of the first conveyor system (42) and configured for cutting a slab (48) of sedum substrate from the strip (36) of sedum substrate;
a second conveyor system (44) arranged downstream of the second cutting unit (46) and configured for receiving the strip (36) of sedum substrate and cut slabs (48) of sedum substrate and conveying thereof;
a stacking unit (52) configured for stacking cut slabs (48) of sedum substrate received from the second conveyor system (44) in a stacking arrangement;
**characterized in that** the second cutting unit (46) comprises a cutter frame (70,72, 73) having a plurality of driven circular cutting elements (74) that are arranged transversely to the conveying direction of the strip (36) of sedum substrate and adjacent to one another, and that are configured for movement in a first direction transverse to the conveying direction of the first conveyor system (42) in cutting contact with the strip (36) of sedum substrate, thereby cutting a slab (48) of sedum substrate from the strip (36) of sedum substrate in the width direction thereof and configured to allow movement in a second direction, opposite to the first direction, at a height above the first conveyor system (42) and the second conveyor system (44) without contacting the strip of sedum substrate.

2. Sedum slab harvester according to claim 1, wherein the plurality of driven circular cutting elements (74) of the second cutting unit (46) are mounted on at least one movable cutting unit subframe (72; 73), that is movably mounted to a fixed cutting unit subframe (70).

3. Sedum slab harvester according to claim 2, wherein a first movable cutting unit subframe (72) is movably mounted to the fixed cutting unit subframe (70) by a first piston cylinder assembly (76) configured for moving the movable cutting unit subframe (72) in the height direction and a second movable cutting unit subframe (73) is movably mounted to the first subframe (72) by a second piston cylinder assembly (80) configured for moving the movable cutting unit subframe (73) in the first and second direction, wherein the cutting elements (74) are mounted on the second subframe (73) .

4. Sedum slab harvester according to any one of the preceding claims, wherein the circular cutting elements (74) are configured for co-rotation in the first direction.

5. Sedum slab harvester according to any one of the preceding claims, wherein the driven circular cutting elements (74) are circular blades provided with a diamond cutting edge at the circumference of the blades.

6. Sedum slab harvester according to any one of the preceding claims, wherein the stacking unit (52) comprises a stacking conveyor (54) configured for receiving a cut slab (48) of sedum substrate from the second conveyor system (44) and conveying thereof, a slab support (86) configured for movement in a direction transverse to the movement direction of the stacking conveyor (54), a gripper system (88, 90) configured for gripping from above a cut slab (48) from the stacking conveyor (54) and transferring the cut slab (48) onto the slab support (86) and configured for transferring the cut slab (48) from the slab support (86) to a collection carrier (102, 104), and a collection carrier (105) positioned below the second gripper (90) and configured for receiving cut slabs (48) from the slab support (86) in a stack arrangement.

7. Sedum slab harvester according to claim 6, comprising a frame (82) having beams (84) extending from the stacking conveyor (54) in a direction transverse to the conveying direction of the stacking conveyor (54), a slab support plate (86) movably supported by the frame beams (84) and configured for reciprocating movement in a direction transverse to the conveying direction of the stacking conveyor (54) between a loading position, wherein the gripper system (88, 90) slides a cut sedum substrate slab (48) from the stacking conveyor (54) onto the slab support plate (86), and an unloading position, wherein the gripper system (88,90) slides the cut sedum substrate slab (48) from the slab support plate (86) onto the collection carrier (105).

8. Sedum slab harvester according to claim 7, wherein the gripper system comprises a first gripper (88), mounted on the slab support plate (86), and configured for moving in a direction transverse to the conveying direction of the stacking conveyor (54), and for gripping from above a cut slab (48) from the stacking conveyor (54) and transferring it to the slab support plate (86), a second gripper (90), mounted at a fixed position, configured for gripping from above a cut slab (48) from the slab support (86).

9. Sedum slab harvester according to any one of claims 6 - 8, wherein the gripper system comprises a first gripper (88) having a gripper element (94) extending in the conveying direction of the stacking conveyor (54), configured to be movable between a gripping position for contacting the cut slab (48) of sedum substrate on the stacking conveyor (54) and slab support (86) and an open position and/or a second gripper (90) having a gripper element (98) extending in the conveying direction of the stacking conveyor (54), configured to be movable between a gripping position for contacting the cut slab (48) of sedum substrate on the slab support (86) and an open position, preferably wherein the face of a gripper element (94; 98) configured for engaging the cut slab (48) is provided with a plurality of projections (96; 100).

10. Sedum slab harvester according to any one of the preceding claims, further comprising a foil collector (60), configured for collecting used separation foil (40) from the ground (18), preferably wherein the collector (60) comprises a rotatably arranged foil winding reel (62) having a rotary axis in the transverse direction with respect to driving direction of the harvester, configured for winding the separation foil (40) from the ground (18).

11. Sedum slab harvester according to any one of the preceding claims, wherein the second conveyor system (44) comprises at least two subconveyors (44a, 44b) in series, configured for establishing a spacing between cut slabs (48) of sedum substrate from the second cutting unit (46) to the stacking unit (52).

12. Sedum slab harvester according to any one of the preceding claims, further comprising sensors (50), configured for detecting the presence of sedum substrate at one or more positions on the first conveyor system (42), second conveyor system (44) and/or stacking conveyor (54), preferably further comprising a controller (26), configured for controlling the operation of the actively operated harvester components, based on signals received from the sensors (50), preferably also depending on the movement speed of the sedum slab harvester (10) over the ground (18), preferably wherein the controller (26) is configured to drive the first conveyor system (42) at a speed equal to the forward speed of the sedum slab harvester over the ground, and to perform a cycle of accelerating and decelerating the subconveyors (44a, 44b) of the second conveyor system (44) in order to establish a spacing between cut slabs (48) on the second conveyor system (44).

13. Sedum slab harvester according to any one of the preceding claims, further comprising a reject conveyor (114) downstream of the stacking unit (52), configured for receiving and conveying a cut slab (48) of sedum substrate from the stacking unit (52).

14. Sedum slab harvester according to claim 12, wherein the controller (26) is configured for determining a slab length from signals received from the sensors (50), and for driving the stacking conveyor (54) and reject conveyor (114), if the determined slab length is outside a predefined range.

15. Sedum slab harvester according to any one of the preceding claims, further comprising a a buffer (120) positioned between the first cutting unit (30) and the second cutting unit (46), which buffer is configured for temporarily accumulating the sedum strip (36) that is being conveyed from the first cutting unit (30) towards the second cutting unit (46).

## Patentansprüche

1. Sedumplatten-Erntemaschine (10) zum Ernten von Platten (48) von Sedumsubstrat vom Boden (18), umfassend
eine erste Schneideinheit (30), die zum Schneiden mindestens einer Längskante (24) eines Streifens (36) von Sedumsubstrat ausgelegt ist;
einen Trennkopf (41), der zum Trennen des Streifens (36) von Sedumsubstrat vom Boden (18) ausgelegt ist;
ein erstes Fördersystem (42), das zum Aufnehmen und Befördern des Streifens (36) von Sedumsubstrat ausgelegt ist, der durch den Trennkopf (41) vom Boden (18) getrennt wurde;
eine zweite Schneideinheit (46), die am stromabwärtigen Ende des ersten Fördersystems (42) angeordnet und zum Schneiden einer Platte (48) von Sedumsubstrat von dem Streifen (36) von Sedumsubstrat ausgelegt ist;
ein zweites Fördersystem (44), das stromabwärts der zweiten Schneideinheit (46) angeordnet ist und zum Aufnehmen des Streifens (36) von Sedumsubstrat und der geschnittenen Platten (48) von Sedumsubstrat und zum Befördern davon ausgelegt ist;
eine Stapeleinheit (52), die zum Stapeln geschnittener Platten (48) von Sedumsubstrat, die von dem zweiten Fördersystem (44) aufgenommen wurden, in einer Stapelanordnung ausgelegt ist;
**dadurch gekennzeichnet, dass** die zweite Schneideinheit (46) einen Schneidrahmen (70, 72, 73) mit mehreren angetriebenen kreisförmigen Schneidelementen (74) umfasst, die quer zur Förderrichtung des Streifens (36) von Sedumsubstrat und benachbart zueinander angeordnet sind, und der zur Bewegung in einer ersten Richtung quer zur Förderrichtung des ersten Fördersystems (42) in Schneidkontakt mit dem Streifen (36) von Sedumsubstrat ausgelegt ist, wodurch eine Platte (48) von Sedumsubstrat von dem Streifen (36) von Sedumsubstrat in der Breitenrichtung davon abgeschnitten wird, und dazu ausgelegt ist, eine Bewegung in einer zweiten Richtung entgegengesetzt zur ersten Richtung in einer Höhe über dem ersten Fördersystem (42) und dem zweiten Fördersystem (44) zu ermöglichen, ohne den Streifen von Sedumsubstrat zu berühren.

2. Sedumplatten-Erntemaschine nach Anspruch 1, wobei die mehreren angetriebenen kreisförmigen Schneidelemente (74) der zweiten Schneideinheit (46) an mindestens einem beweglichen Schneideinheitunterrahmen (72; 73) montiert sind, der beweglich an einem feststehenden Schneideinheitunterrahmen (70) montiert ist.

3. Sedumplatten-Erntemaschine nach Anspruch 2, wobei ein erster beweglicher Schneideinheitunterrahmen (72) durch eine erste Kolbenzylinderanordnung (76), die zum Bewegen des beweglichen Schneideinheitunterrahmens (72) in der Höhenrichtung ausgelegt ist, beweglich an dem feststehenden Schneideinheitunterrahmen (70) montiert ist und ein zweiter beweglicher Schneideinheitunterrahmen (73) durch eine zweite Kolbenzylinderanordnung (80), die zum Bewegen des beweglichen Schneideinheitunterrahmens (73) in der ersten und der zweiten Richtung ausgelegt ist, beweglich an dem ersten Unterrahmen (72) montiert ist, wobei die Schneidelemente (74) an dem zweiten Unterrahmen (73) montiert sind.

4. Sedumplatten-Erntemaschine nach einem der vorhergehenden Ansprüche, wobei die kreisförmigen Schneidelemente (74) zur Mitdrehung in der ersten Richtung ausgelegt sind.

5. Sedumplatten-Erntemaschine nach einem der vorhergehenden Ansprüche, wobei die angetriebenen kreisförmigen Schneidelemente (74) kreisförmige Messer sind, die am Umfang der Messer mit einer Diamantschneide versehen sind.

6. Sedumplatten-Erntemaschine nach einem der vorhergehenden Ansprüche, wobei die Stapeleinheit (52) einen Stapelförderer (54), der zum Aufnehmen einer geschnittenen Platte (48) von Sedumsubstrat von dem zweiten Fördersystem (44) und zum Befördern davon ausgelegt ist, einen Plattenhalter (86), der zur Bewegung in einer Richtung quer zur Bewegungsrichtung des Stapelförderers (54) ausgelegt ist, ein Greifersystem (88, 90), das zum Greifen einer geschnittenen Platte (48) von oben von dem Stapelförderer (54) und zum Überführen der geschnittenen Platte (48) auf den Plattenhalter (86) ausgelegt ist und zum Überführen der geschnittenen Platte (48) von dem Plattenhalter (86) auf einen Sammelträger (102, 104) ausgelegt ist, und einen Sammelträger (105), der unterhalb des zweiten Greifers (90) positioniert ist und zum Aufnehmen von geschnittenen Platten (48) von dem Plattenhalter (86) in einer Stapelanordnung ausgelegt ist, umfasst.

7. Sedumplatten-Erntemaschine nach Anspruch 6, umfassend einen Rahmen (82) mit Holmen (84), die sich von dem Stapelförderer (54) in einer Richtung quer zur Förderrichtung des Stapelförderers (54) erstrecken, eine Plattenhalteplatte (86), die durch die Rahmenholme (84) beweglich gehalten ist und zur Hin- und Herbewegung in einer Richtung quer zur Förderrichtung des Stapelförderers (54) zwischen einer Beladeposition, in der das Greifersystem (88, 90) eine geschnittene Sedumsubstratplatte (48) von dem Stapelförderer (54) auf die Plattenhalteplatte (86) verschiebt, und einer Entladeposition, in der das Greifersystem (88, 90) die geschnittene Sedumsubstratplatte (48) von der Plattenhalteplatte (86) auf den Sammelträger (105) verschiebt, ausgelegt ist.

8. Sedumplatten-Erntemaschine nach Anspruch 7, wobei das Greifersystem einen ersten Greifer (88), der auf der Plattenhalteplatte (86) montiert ist und zum Bewegen in einer Richtung quer zur Förderrichtung des Stapelförderers (54) und zum Greifen einer geschnittenen Platte (48) von oben von dem Stapelförderer (54) und Übergeben derselben auf die Plattenhalteplatte (86) ausgelegt ist, einen zweiten Greifer (90), der an einer festen Position montiert ist, der zum Greifen einer geschnittenen Platte (48) von oben von dem Plattenhalter (86) ausgelegt ist, umfasst.

9. Sedumplatten-Erntemaschine nach einem der Ansprüche 6-8, wobei das Greifersystem einen ersten Greifer (88) mit einem Greiferelement (94), das sich in der Förderrichtung des Stapelförderers (54) erstreckt, der dazu ausgelegt ist, zwischen einer Greifposition zum Kontaktieren der geschnittenen Platte (48) von Sedumsubstrat auf dem Stapelförderer (54) und dem Plattenhalter (86) und einer geöffneten Position beweglich zu sein, und/oder einen zweiten Greifer (90) mit einem Greiferelement (98), das sich in der Förderrichtung des Stapelförderers (54) erstreckt, der dazu ausgelegt ist, zwischen einer Greifposition zum Kontaktieren der geschnittenen Platte (48) von Sedumsubstrat auf dem Plattenhalter (86) und einer geöffneten Position beweglich zu sein, vorzugsweise wobei die Stirnfläche eines Greiferelements (94; 98), das zum Eingreifen in die geschnittene Platte (48) ausgelegt ist, mit mehreren Vorsprüngen (96; 100) versehen ist, umfasst.

10. Sedumplatten-Erntemaschine nach einem der vorhergehenden Ansprüche, ferner umfassend einen Foliensammler (60), der zum Aufsammeln gebrauchter Trennfolie (40) vom Boden (18) ausgelegt ist, vorzugsweise wobei der Sammler (60) eine drehbar angeordnete Folienwickelspule (62) mit einer Drehachse in der Querrichtung in Bezug auf die Antriebsrichtung der Erntemaschine umfasst, die zum Aufwickeln der Trennfolie (40) vom Boden (18) ausgelegt ist.

11. Sedumplatten-Erntemaschine nach einem der vorhergehenden Ansprüche, wobei das zweite Fördersystem (44) mindestens zwei Unterförderer (44a, 44b) in Reihe umfasst, die zum Herstellen eines Abstands zwischen geschnittenen Platten (48) von Sedumsubstrat von der zweiten Schneideinheit (46) zu der Stapeleinheit (52) ausgelegt sind.

12. Sedumplatten-Erntemaschine nach einem der vorhergehenden Ansprüche, ferner umfassend Sensoren (50), die zum Detektieren des Vorhandenseins von Sedumsubstrat an einer oder mehreren Positionen auf dem ersten Fördersystem (42), dem zweiten Fördersystem (44) und/oder dem Stapelförderer (54) ausgelegt sind, vorzugsweise ferner umfassend eine Steuerung (26), die zum Steuern des Betriebs der aktiv betriebenen Erntemaschinenkomponenten basierend auf von den Sensoren (50) empfangenen Signalen, vorzugsweise auch in Abhängigkeit von der Bewegungsgeschwindigkeit der Sedumplatten-Erntemaschine (10) über den Boden (18) ausgelegt ist, vorzugsweise wobei die Steuerung (26) dazu ausgelegt ist, das erste Fördersystem (42) mit einer Geschwindigkeit anzutreiben, die gleich der Vorwärtsgeschwindigkeit der Sedumplatten-Erntemaschine über den Boden ist, und einen Zyklus aus einem Beschleunigen und Verzögern der Unterförderer (44a, 44b) des zweiten Fördersystems (44) durchzuführen, um einen Abstand zwischen geschnittenen Platten (48) auf dem zweiten Fördersystem (44) herzustellen.

13. Sedumplatten-Erntemaschine nach einem der vorhergehenden Ansprüche, ferner umfassend einen Ausschussförderer (114) stromabwärts der Stapeleinheit (52), der zum Aufnehmen und Befördern einer geschnittenen Platte (48) von Sedumsubstrat von der Stapeleinheit (52) ausgelegt ist.

14. Sedumplatten-Erntemaschine nach Anspruch 12, wobei die Steuerung (26) zum Bestimmen einer Plattenlänge aus von den Sensoren (50) empfangenen Signalen und zum Antreiben des Stapelförderers (54) und des Ausschussförderers (114), falls die bestimmte Plattenlänge außerhalb eines vordefinierten Bereichs liegt, ausgelegt ist.

15. Sedumplatten-Erntemaschine nach einem der vorhergehenden Ansprüche, ferner umfassend einen Puffer (120), der zwischen der ersten Schneideinheit (30) und der zweiten Schneideinheit (46) positioniert ist, wobei der Puffer zum Zwischenlagern des Sedumstreifens (36), der von der ersten Schneideinheit (30) zur zweiten Schneideinheit (46) befördert wird, ausgelegt ist.

## Revendications

1. Récolteuse de plaques de sédum (10) pour récolter des plaques (48) de substrat de sédum à partir du sol (18), comprenant
une première unité de coupe (30) configurée pour couper au moins un bord longitudinal (24) d'une bande (36) de substrat de sédum ;
une tête de séparation (41) configurée pour séparer la bande (36) de substrat de sédum à partir du sol (18) ;
un premier système convoyeur (42) configuré pour recevoir et convoyer la bande (36) de substrat de sédum séparée à partir du sol (18) par la tête de séparation (41) ;
une seconde unité de coupe (46) agencée à l'extrémité aval du premier système convoyeur (42) et configurée pour couper une plaque (48) de substrat de sédum à partir de la bande (36) de substrat de sédum ;
un second système convoyeur (44) agencé aval de la seconde unité de coupe (46) et configuré pour recevoir la bande (36) de substrat de sédum et des plaques coupées (48) de substrat de sédum et convoyer celles-ci ;
une unité d'empilage (52) configurée pour empiler des plaques coupées (48) de substrat de sédum reçues en provenance du second système convoyeur (44) dans un agencement d'empilage ;
**caractérisée en ce que** la seconde unité de coupe (46) comprend un bâti coupeur (70, 72, 73) ayant une pluralité d'éléments de coupe circulaires entraînés (74) qui sont agencés transversalement à la direction de convoyage de la bande (36) de substrat de sédum et adjacents les uns aux autres, et qui sont configurés pour le mouvement dans une première direction transversale à la direction de convoyage du premier système convoyeur (42) en contact de coupe avec la bande (36) de substrat de sédum, coupant ainsi une plaque (48) de substrat de sédum à partir de la bande (36) de substrat de sédum dans la direction de largeur de celle-ci et configurés pour permettre le mouvement dans une seconde direction, opposée à la première direction, à une hauteur au-dessus du premier système convoyeur (42) et du second système convoyeur (44) sans entrer en contact avec la bande de substrat de sédum.

2. Récolteuse de plaques de sédum selon la revendication 1, dans laquelle la pluralité d'éléments de coupe circulaires entraînés (74) de la seconde unité de coupe (46) sont montés sur au moins un sous-bâti d'unité de coupe mobile (72 ; 73), qui est monté de façon mobile sur un sous-bâti d'unité de coupe fixe (70).

3. Récolteuse de plaques de sédum selon la revendication 2, dans laquelle un premier sous-bâti d'unité de coupe mobile (72) est monté de façon mobile sur le sous-bâti d'unité de coupe fixe (70) par un premier ensemble cylindre à piston (76) configuré pour mouvoir le sous-bâti d'unité de coupe mobile (72) dans la direction de hauteur et un second sous-bâti d'unité de coupe mobile (73) est monté de façon mobile sur le premier sous-bâti (72) par un second ensemble cylindre à piston (80) configuré pour mouvoir le sous-bâti d'unité de coupe mobile (73) dans les première et seconde directions, dans laquelle les éléments de coupe (74) sont montés sur le second sous-bâti (73).

4. Récolteuse de plaques de sédum selon l'une quelconque des revendications précédentes, dans laquelle les éléments de coupe circulaires (74) sont configurés pour la corotation dans la première direction.

5. Récolteuse de plaques de sédum selon l'une quelconque des revendications précédentes, dans laquelle les éléments de coupe circulaires entraînés (74) sont des lames circulaires pourvues d'arête de coupe en diamant à la circonférence des lames.

6. Récolteuse de plaques de sédum selon l'une quelconque des revendications précédentes, dans laquelle l'unité d'empilage (52) comprend un convoyeur d'empilage (54) configuré pour recevoir une plaque coupée (48) de substrat de sédum en provenance du second système convoyeur (44) et convoyer celle-ci, un support de plaque (86) configuré pour le mouvement dans une direction transversale à la direction de mouvement du convoyeur d'empilage (54), un système de saisie (88, 90) configuré pour saisir, à partir d'au-dessus, une plaque coupée (48) à partir du convoyeur d'empilage (54) et transférer la plaque coupée (48) jusque sur le support de plaque (86) et configuré pour transférer la plaque coupée (48) depuis le support de plaque (86) jusqu'à un transporteur de collecte (102, 104), et un support de collecte (105) positionné en dessous du second dispositif de saisie (90) et configuré pour recevoir des plaques coupées (48), en provenance du support de plaque (86), en un agencement d'empilage.

7. Récolteuse de plaques de sédum selon la revendication 6, comprenant un bâti (82) ayant des poutres (84) s'étendant à partir du convoyeur d'empilage (54) dans une direction transversale à la direction de convoyage du convoyeur d'empilage (54), une table de support de plaque (86) supportée de façon mobile par les poutres de bâti (84) et configurée pour le mouvement en va-et-vient dans une direction transversale à la direction de convoyage du convoyeur d'empilage (54) entre une position de chargement, dans laquelle le système de saisie (88, 90) fait coulisser un substrat coupé de sédum plaque (48) depuis le convoyeur d'empilage (54) jusque sur la table de support de plaque (86), et une position de déchargement, dans laquelle le système de saisie (88, 90) fait coulisser le substrat coupé de sédum plaque (48) depuis la table de support de plaque (86) jusque sur le support de collecte (105).

8. Récolteuse de plaques de sédum selon la revendication 7, dans laquelle le système de saisie comprend un premier dispositif de saisie (88), monté sur la table de support de plaque (86), et configuré pour se mouvoir dans une direction transversale à la direction de convoyage du convoyeur d'empilage (54), et pour saisir, à partir d'au-dessus, une plaque coupée (48) à partir du convoyeur d'empilage (54) et la transférer jusqu'à la table de support de plaque (86), un second dispositif de saisie (90), monté à une position fixe, configuré pour saisir, à partir d'au-dessus, une plaque coupée (48) à partir du support de plaque (86).

9. Récolteuse de plaques de sédum selon l'une quelconque des revendications 6 à 8, dans laquelle le système de saisie comprend un premier dispositif de saisie (88) ayant un élément de dispositif de saisie (94) s'étendant dans la direction de convoyage du convoyeur d'empilage (54), configuré pour être mobile entre une position de saisie pour mettre en contact la plaque coupée (48) de substrat de sédum sur le convoyeur d'empilage (54) et le support de plaque (86) et une position ouverte et/ou un second dispositif de saisie (90) ayant un élément de dispositif de saisie (98) s'étendant dans la direction de convoyage du convoyeur d'empilage (54), configuré pour être mobile entre une position de saisie pour entrer en contact avec la plaque coupée (48) de substrat de sédum sur le support de plaque (86) et une position ouverte, de préférence dans laquelle la face d'un élément de dispositif de saisie (94 ; 98) configurée pour entrer en prise avec la plaque coupée (48) est pourvue d'une pluralité de saillies (96 ; 100).

10. Récolteuse de plaques de sédum selon l'une quelconque des revendications précédentes, comprenant en outre un collecteur de feuille (60), configuré pour collecter une feuille de séparation utilisée (40) à partir du sol (18), de préférence dans laquelle le collecteur (60) comprend une bobine d'enroulement de feuille agencée de façon rotative (62) ayant un axe de rotation dans la direction transversale par rapport à une direction de conduite de la récolteuse, configurée pour enrouler la feuille de séparation (40) à partir du sol (18).

11. Récolteuse de plaques de sédum selon l'une quelconque des revendications précédentes, dans laquelle le second système convoyeur (44) comprend au moins deux sous-convoyeurs (44a, 44b) en série, configurés pour établir un espacement entre des plaques coupées (48) de substrat de sédum depuis la seconde unité de coupe (46) jusqu'à l'unité d'empilage (52).

12. Récolteuse de plaques de sédum selon l'une quelconque des revendications précédentes, comprenant en outre des capteurs (50), configurés pour détecter la présence de substrat de sédum à une ou à plusieurs positions sur le premier système convoyeur (42), le second système convoyeur (44), et/ou le convoyeur d'empilage (54), comprenant de préférence en outre une unité de commande (26), configurée pour commander le fonctionnement des composants de récolteuse mis activement en fonctionnement, sur la base de signaux reçus en provenance des capteurs (50), de préférence en fonction également de la vitesse de mouvement de la récolteuse de plaques de sédum (10) par-dessus le sol (18), de préférence dans laquelle l'unité de commande (26) est configurée pour entraîner le premier système convoyeur (42) à une vitesse égale à la vitesse de marche avant de la récolteuse de plaques de sédum par-dessus le sol, et pour réaliser un cycle d'accélération et de décélération des sous-convoyeurs (44a, 44b) du second système convoyeur (44) afin d'établir un espacement entre des plaques coupées (48) sur le second système convoyeur (44).

13. Récolteuse de plaques de sédum selon l'une quelconque des revendications précédentes, comprenant en outre un convoyeur de rejet (114) en aval de l'unité d'empilage (52), configuré pour recevoir une plaque coupée (48) de substrat de sédum en provenance de l'unité d'empilage (52), et la convoyer depuis celle-ci.

14. Récolteuse de plaques de sédum selon la revendication 12, dans laquelle l'unité de commande (26) est configurée pour déterminer une longueur de plaque à partir de signaux reçus en provenance des capteurs (50), et pour entraîner le convoyeur d'empilage (54) et le convoyeur de rejet (114), si la longueur de plaque est en dehors d'une plage prédéfinie.

15. Récolteuse de plaques de sédum selon l'une quelconque des revendications précédentes, comprenant en outre un dispositif d'amortissement (120) positionné entre la première unité de coupe (30) et la seconde unité de coupe (46), lequel dispositif d'amortissement est configuré pour accumuler temporairement la bande de sédum (36) qui est en train d'être convoyée depuis la première unité de coupe (30) vers la seconde unité de coupe (46).
